# EUROPÄISCHE PATENTSCHRIFT

(11) **EP 2 413 009 B1**
(45) Veröffentlichungstag und Bekanntmachung des Hinweises auf die Patenterteilung: **10.12.2014**
(21) Anmeldenummer: 11174732.5
(22) Anmeldetag: 20.07.2011
(51) Int. Cl.: F16K 37/00

(54) **Prozessventil mit Kraftmesseinrichtung**
Process valve with force measuring device
Soupape de procédé dotée d'un dispositif dynamométrique

(30) Priorität: 28.07.2010 DE 102010036711
(43) Veröffentlichungstag der Anmeldung: 01.02.2012
(73) Patentinhaber: Samson Aktiengesellschaft, 60314 Frankfurt (DE)
(72) Erfinder: Kolbenschlag, Stefan, 64291 Darmstadt (DE); Kiesbauer, Jörg, 64859 Eppertshausen (DE); Schärtner, Karl-Bernd, 61130 Nidderau (DE)
(74) Vertreter: Puschmann Borchert Bardehle Patentanwälte Partnerschaft mbB

(56) Entgegenhaltungen:
- DE-A1- 2 747 029
- DE-U1- 20 009 023
- US-A1- 2008 006 101

## Beschreibung

Die Erfindung betrifft ein Prozessventil mit einer Kraftmesseinrichtung gemäß dem Oberbegriff des Anspruchs 1.

Prozessventile werden in der Prozessindustrie zur Drosselung fluidischer Ströme verwendet. Ein Drosselkörper wird dazu in einer definierten Öffnung eines Ventilsitzes gedreht oder translatorisch bewegt. Die dafür erforderliche Kraft wird durch einen pneumatischen oder elektrischen Antrieb aufgebracht. Die Kopplung zwischen Antrieb und Drosselkörper erfolgt in der Regel über eine Ventilstange.

Die DE 200 09 023 U 1 offenbart ein Membranventil mit einer vorbestimmten axialen Schließkraft gegen einen Dichtsteg in Schließstellung wobei ein Federelement im Kraftübertragungsweg vom Druckstück zum Antrieb eingebracht ist und mit einer Kontaktanordnung zur Erzeugung einer Gegenkraft entsprechendes Signal in Verbindung gebracht wird. Die beim Schließvorgang aufgebrachte Schließkraft wird sobald das Federelement ausreichend komprimiert ist um mit der Schaltzunge den Kontakt zur Schalteinrichtung herzustellen, erfasst.

Die DE OS 2747029 offenbart ein Ventil mit einem Ventilglied auf das ein Kolben und eine Feder einwirken, wobei die Feder nur einen kleinen Teil des Ventilhubs als wirksamen Weg aufweist und der Kolben über die Feder auf das Ventilglied wirkt. Diese Feder verringert die Differenzwärmedehnung und auftretende Schwankungen der Zugkraft. Zudem ist sie in der Endstellung des Ventilglieds in der Lage Druckschwankungen in der Hydraulik auszugleichen. Gemäß dieser Druckschrift ist zudem ein Endschalter vorgesehen, der bei geschlossenem Ventil diese Position meldet.

Die genaue Kenntnis der aufgebrachten Kraft ist wichtig, um zum einen den Prozesszustand als auch den Zustand des Ventils oder des Stellgeräts zu beurteilen. Dazu ist aus der DE 10 2004 006 354 A1 ein Verfahren und eine Vorrichtung zur Beurteilung des Wartungszustandes bekannt, wofür die in der Ventilstange auftretenden Kräfte gemessen wird.

Zur Messung der Kraft wird nach dem Stand der Technik ein Dehnmessstreifen an der Ventilstange oder einer Wägezelle angebracht, die wiederum in Wirkverbindung mit der Ventilstange steht. Durch den Dehnmessstreifen wird die verformungsbedingte Flächenänderung des Materials gemessen.

Nachteilig ist an dieser Ausführungsform, dass sie sehr kostenintensiv ist, da aufgrund des niedrigen elektrischen Ausgangssignals hochwertige elektronische Verstärker eingesetzt werden müssen, um ein gutes Nutzsignal zu erhalten, Neben den hohen Kosten wirkt sich die hohe Stromaufnahme negativ auf den Einsatzbereich des Ventils aus. Prozessventile werden oft in "explosionsgefährdeten Bereichen" eingesetzt, wobei jedwede Elektronik in diesen Bereichen explosionsvermeidend ausgebildet sein muss, was der Forderung nach einer hohen Stromaufnahme zuwiderläuft.

Darüber hinaus ist es bekannt, den Antriebsdruck bei einem pneumatischen Antrieb oder die Leistungsaufnahme bei einem elektrischen Antrieb zu messen. Nachteilig an dieser Methode ist jedoch, dass das Messergebnis durch die Reibungskräfte im System verfälscht wird. Zudem können bei einem pneumatischen Antrieb schnelle Druckspitzen aufgrund der Trägheit der Sensoren und der Kompressibilität des Antriebsmediums nicht erfasst werden.

Der Erfindung liegt die Aufgabe zugrunde eine Vorrichtung anzugeben, welche unter Vermeidung der oben genannten Nachteile, die Kraft, die auf einen Ventilkörper aufgebracht wird, schnell, zuverlässig und stromarm messen kann.

In bekannter Weise umfasst ein Prozessventil eine Antriebseinheit, die über eine Ventilstange mit einem Ventilkörper verbunden ist und diesen zur Unterbindung eines durch das Prozessventil Fluidstroms in einen Ventilsitz presst. Zudem ist eine Kraftmesseinrichtung vorgesehen, die mit der Ventilstange in Wirkverbindung steht. Mittels der Kraftmesseinrichtung kann die Kraft, mit welcher der Ventilkörper in den Ventilsitz gepresst wird, ermittelt werden.

Erfindungsgemäß umfasst die Kraftmesseinrichtung eine Feder und eine Wegmesseinrichtung, wobei die auf die Feder aufgebrachte Kraft über die Wegänderung mittels einer Wegmesseinrichtung gemessen wird. Über die bekannte Federkonstante kann dann auf die einwirkende Kraft rückgeschlossen werden. Die Wegmesseinrichtung bestimmt den Federweg durch die Messung der Positionsänderung eines Messpunkts gegenüber einem Referenzpunkt. Durch die Messung der Positionsänderung ist entgegen dem Stand der Technik eine aufwandsarme Messung möglich.

Eine Feder im Sinne der Erfindung ist im Wesentlichen ein elastisch verformbarer, sich passiv rückstellender Körper beliebiger Geometrie, wobei Geometrie und das Material auf die auf Bauraumbedürfnisse und Anforderungen an die Federkennlinie abstimmbar sind. Insbesondere wird die Federwirkung durch die geometrische Gestaltung der Feder erreicht.

Durch die Kraftmessung mittels einer Feder in einem Prozessventil können auf sehr geringem Bauraum hohe Kräfte gemessen werden. Die Anordnung weist zudem eine hohe Dynamik und ein schnelles Ansprechverhalten auf.

In einer weiter vorteilhaften Ausgestaltung ist zur Übertragung des Federwegs an die Wegmesseinrichtung ein mechanischer Übertrager bzw. Adapter, insbesondere eine Hebelübersetzung vorgesehen, die den mechanischen Messweg vergrößert. Dies hat den Vorteil, dass eine höhere Messgenauigkeit erzielt, und ein besseres Ausgangssignal gewährleistet wird, ohne dass elektrische Verstärker verwendet werden müssen.

Gemäß einer weiteren Ausführung der Erfindung kann die Kraftmesseinrichtung im an der Ventilstange direkt am Drosselkörper angebracht sein. Alternativ, kann die Kraftmesseinrichtung aber auch in der Ventilstange oder im Antrieb untergebracht sein.

In einer weiteren vorteilhaften Ausgestaltung ist die Wegmesseinrichtung unter Ausnutzung des Anisotropen Magnetoresistiven Effekts, als AMR-Sensor und einem Magneten derart ausgebildet, dass eine Wegänderung des Magneten gegenüber dem Sensor eine hohe Änderung der Richtung der Feldstärke des Magneten am Ort des Sensors zur Folge hat. Der Magnet wird im Verhältnis zum Federweg bewegt.

Nach einer vorteilhaften Ausführungsform ist insbesondere ein Dauermagnet an einem Ende eines Hebels angebracht, der sich gegenüber dem AMR-Sensor bewegt, und der Federweg auf das zweite Hebelende abgebildet ist. Der Hebelarm an dem der Dauermagnet befestigt ist, ist länger als der Hebelarm, auf welchem der Federweg ausgebildet wird. Dies hat eine mechanische Wegverstärkung zur Folge.

Im Sinne der Erfindung kann die Wegmesseinrichtung auch basierend auf anderen Wegmessprinzipien, wie Potentiometer, Differentialtrafo, optisch oder Querankeraufnehmer ausgebildet sein.

Der Messbereich kann durch unterschiedliche Federn mit unterschiedlichen Federkonstanten angepasst werden, wobei die Federn so gewählt sind, dass der mechanische Verfahrweg gleich bleibt. Dies hat den Vorteil, dass durch dieselbe Wegmesseinrichtung unterschiedliche Kraftbereiche abgedeckt werden können.

Eine Überlastfestigkeit der mechanischen Feder wird durch die Ausbildung entsprechender Anlageflächen erreicht. Die Anlageflächen sind als Anschläge ausgebildet und begrenzen den Federweg.

Durch die Einstellung der Anlageflächen können durch solche Überlastkörper bestimmte Messbereiche ausgeblendet werden, um in dem übrigen Messbereich eine höhere Genauigkeit zu erzielen. z. B. können so die Schließstellung oder in Öffnungsstellung des Ventils auf den Sensorbereich abgestimmt werden. So kann beispielsweise die Kraft nur in einem begrenzten Bereich der Ventilstellung im Schließbereich und 20% darüber gemessen werden.

In einer weiteren Ausführungsform, kann die Feder als S-förmiger Festkörper ausgebildet sein. In einen solchen S-förmigen Festkörper können neben einem Federelement bereits auch ein Hebel und eine Wegmesseinrichtung integriert sein. Dies schafft eine besonders kompakte Ausführungsform.

Eine Kraftmesseinrichtung kann derart ausgelegt sein, dass diese eine nichtlineare Kraft-Weg-Kennlinie der Feder aufweist. Durch eine nicht-lineare Kraft- Weg-Kennlinie wird insbesondere der größte Teil des Sensorbereiches auf besonders relevante Ventilstellungen fokussiert.

Gemäß einem weiteren Aspekt der Erfindung kann die erfindungsgemäße Kraftmesseinrichtung auch Anwendung auf Prozessventile finden, die als Schwenkstellgeräte ausgebildet sind.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im folgenden anhand der in der Zeichnung dargestellten Ausführungsbeispiele näher beschrieben. In der Beschreibung, in den Ansprüchen und in der Zeichnung werden die in der unten angeführten Liste der Bezugszeichen verwendeten Begriffe und zugeordnete Bezugszeichen verwendet.

In der Zeichnung bedeutet:
- Fig. 1: eine Prozessventil mit einer Kraftmesseinrichtung,
- Fig. 2: eine schematische Darstellung einer Kraftmesseinrichtung,
- Fig.3: und eine Feder als s-förmiger Festkörper.

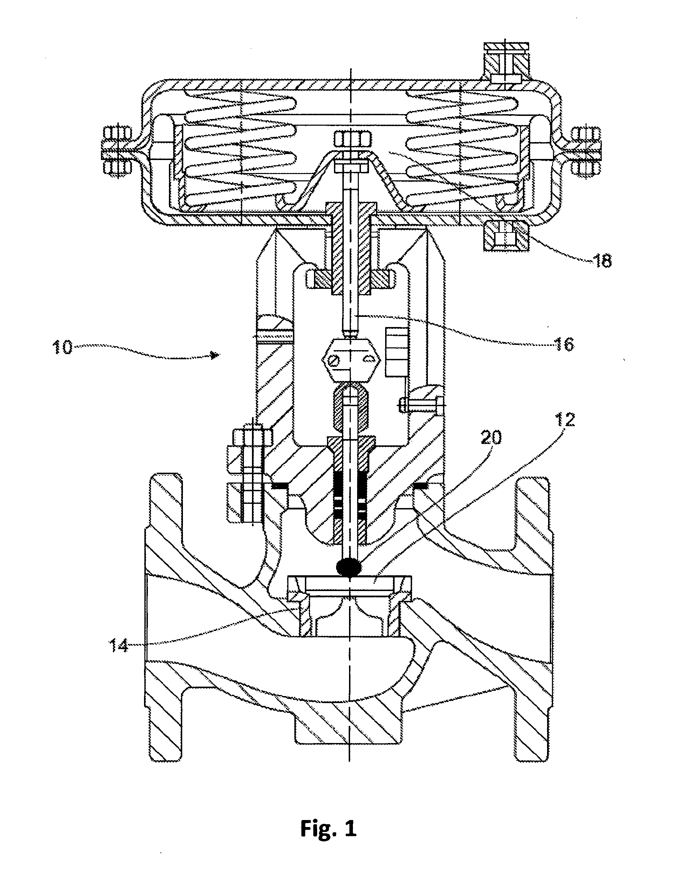

Fig. 1 zeigt ein Prozessventil 10 mit einer erfindungsgemäßen Kraftmesseinrichtung 20. Das dargestellte Prozessventil 10 weist einen Ventilkörper 12 auf, welcher den Durchfluss über die Einpresstiefe in einen Ventilsitz 14 regelt. Zwischen der Ventilstange 16 und dem Ventilkörper 12 ist die Kraftmesseinrichtung 20 angeordnet. Die Anordnung der Kraftmesseinrichtung 20 nahe des Ventilkörpers 12 hat den Vorteil, dass die Reibung der Ventilstange 16 die Kraftmessung nicht beeinflusst. Das gezeigte Prozessventil 10 wird mittels eines pneumatischen Antriebs 18 gesteuert. Indem die vom pneumatischen Antrieb 18 auf den Ventilkörper 12 aufgebrachte Kraft aufgezeichnet wird, kann eine zuverlässige Aussage über den Zustand des Prozessventils 10 getroffen werden.

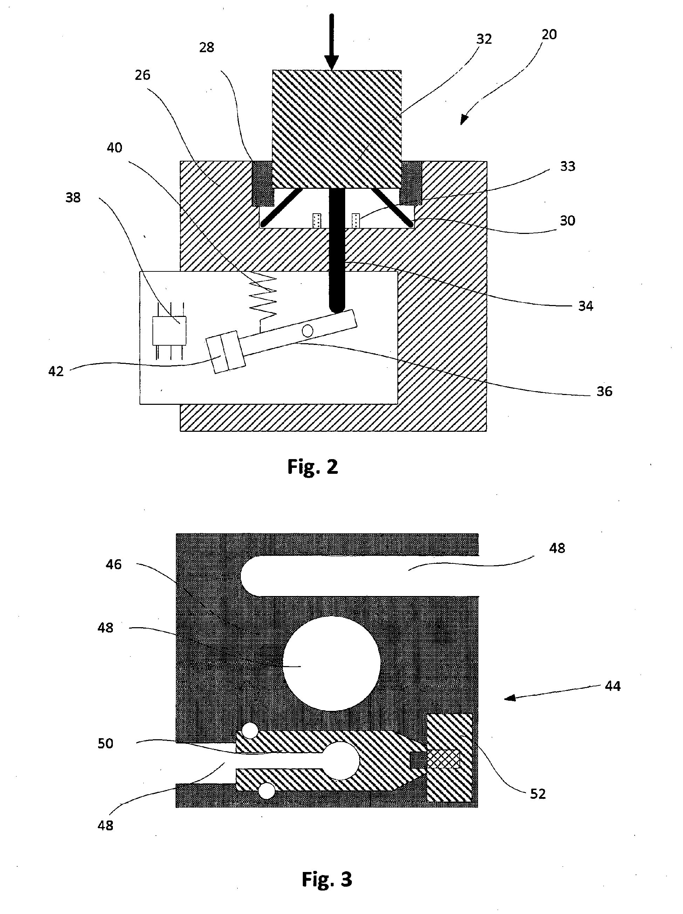

Fig. 2 zeigt eine Ausführung der Messeinrichtung 22 umfassend ein Gehäuse 26, in welchem ein Kolben 32 aufgenommen ist, der mittels Gleitbuchsen 28 in axialer Richtung beweglich geführt ist. Um ein Verkanten bzw. eine Verfälschung der tatsächlich aufgebrachten Kraft zu vermeiden ist in der Kraftmesseinrichtung 22 um den Kolben 32 herum eine Gleitbuchse 28 angebracht. Der Kolben 32 ist durch eine Tellerfeder 30 gegenüber dem Gehäuse 26 abgestützt. Zudem ist eine Anlagefläche 33 zwischen dem Gehäuse 26 und dem Kolben 32 vorgesehen. Die Anlagefläche 33 beschränkt den Federweg der Feder 30, wodurch die Federkennlinie auf einen bestimmten Kraftbereich eingeschränkt wird, was die Auflösung in diesem Bereich erhöht. Eine auf dem Kolben 32 ausgeübte Kraft hat eine Bewegung der Tellerfeder 30 abhängig ihrer Federkennlinie zur Folge. Diese Bewegung wird über einen Druckstift 34 auf einen Hebelarm 36 übertragen. In diesem Fall stellt beispielsweise die Druckstiftspitze den Messpunkt dar, dessen Positionsänderung gemessen wird. Der Hebelarm 36 ist derart aufgehängt, das der Druckstift 34 am kürzeren Ende des Hebelarms 36 angreift. Am längeren Teil des Hebelarms 36 ist ein Permanentmagnet 42 befestigt. Dieses beschreibt bei einer Bewegung des Kolbens eine kreisförmige Bewegung um den Lagerpunkt des Hebels 36. Die Bewegung des Permanentmagneten 42 erfolgt relativ zu einem AMR-Sensors 38, welcher fest mit dem Gehäuse verbunden ist. Abhängig von der Lage des Permanentmagneten 42 ändert sich das Magnetfeld am Ort des AMR-Sensors 38, wodurch dieser die Lage des Permanentmagneten 42 sehr genau ermitteln kann. Durch den Hebelarm 36 wird die tatsächlich vom Kolben 32 ausgeführte Bewegung mechanisch verstärkt.

Durch die mechanische Verstärkung der Relativbewegung, entfallen aufwendige hochwertige elektronische Verstärker, was zu einer enormen Kostenersparnis führt. Da der AMR-Sensor 38 den mechanisch vergrößerten Weg problemlos mit einer ausreichenden Genauigkeit bestimmen kann, sind auch keine DMS-Streifen, welche vorgenannte Nachteile aufweisen, notwendig. Der Ventilkörper, welcher an der Unterseite der Kraftmesseinrichtung 22 anschließt, indem die Bewegung von der Ventilstange auf den Kolben übertragen wird, weitgehend ohne Gegenkraft bewegt bis der Ventilkörper in dem Ventilsitz anliegt. Liegt die Anpresskraft des Antriebs über einem bestimmen Schwellwert der Federkennlinie, bewegt sich in Folge dessen die Ventilstange relativ zum Ventilkörper weiter. Abhängig der Federkennlinie kann dadurch die aufgebrachte Kraft bestimmt werden.

Fig. 3 zeigt einen Teil einer Kraftmesseinrichtung 44 umfassend einen Körper 46, welcher durch Ausnehmungen 48 mehr oder minder S-förmig ausgebildet ist. Durch die Schwächung des Vollmaterials ergibt sich eine Feder mit einer zugeordneten Federkennlinie im Sinne der Erfindung. Ein mechanischer Wegübertrager 50 ist in dieser Ausführungsform zwischen dem unteren und dem mittleren Schenkel des S-förmigen Körpers 46 so gelagert, dass durch die anliegende Kraft der S-förmige Körper 46 verformt wird. In dieser Ausführungsform wird letztendlich die Positionsänderung eines ersten Hebellagers gegenüber dem zweiten Hebellager gemessen. Durch die Positionsänderung der beiden Hebellager in Relation zueinander, wird der Hebel 50 verschwenkt. Entsprechend der Länge des Hebels 50 wird der Weg gegenüber der Distanzänderung der beiden Hebellager vergrößert. Der Weg, den das freie Ende des Übertragungselements 50 zurücklegt, wird über ein Sensorelement 52 gemessen.

Die Messung erfolgt vorzugsweise optisch. Diese Ausführung hat den besonderen Vorteil, dass der Sensor direkt auf dem Federelement montiert werden kann, was zu einer erheblichen Reduktion der notwendigen Bauelemente führt. Da sowohl an der Ober- als auch an der Unterseite Gewinde in den S-förmigen Körper 46 eingebracht sind, eignet sich die in Fig. 3 beschriebene Ausführungsform besonders um die Kraftmesseinrichtung 44 zwischen zwei Teilen einer Ventilstangen zu befestigen.

### Bezugszeichenliste

- 10: Prozessventil
- 12: Drosselkörper
- 14: Ventilsitz
- 16: Ventilstange
- 18: Antrieb
- 20: Kraftmesseinrichtung
- 26: Gehäuse
- 28: Gleitbuchse
- 30: Tellerfeder
- 32: Kolben
- 33: Analagefläche
- 34: Druckstift
- 36: Hebelarm
- 38: AMR-Sensor
- 40: Rückstellfeder
- 42: Permanentmagnet
- 44: Kraftmesseinrichtung
- 46: Festkörper
- 48: Ausnehmungen
- 50: Wegübertrager bzw. Hebel
- 52: Sensorelement

## Patentansprüche

1. Prozessventil (10) umfassend einen Ventilsitz (14), einen Drosselkörper (12), eine Ventilstange (16) und einen auf diese wirkende Antriebseinheit (18), wobei zwischen Antriebseinheit (18) und Drosselkörper (12) eine Kraftmesseinrichtung (20, 44) vorgesehen ist, wobei die Kraftmesseinrichtung (24, 49) eine Feder (30, 46) aufweist, und die Kraftmesseinrichtung (29, 44) eine Wegmesseinrichtung (38, 42, 50, 52) umfasst, wobei durch die Wegmesseinrichtung (38, 42, 50, 52) die Positionsänderung eines Messpunkts gegenüber einem Referenzpunkt messbar ist, und die einwirkende Kraft über den Weg, den sich die Feder (30, 46) durch die einwirkende Kraft verändert, bestimmbar ist, **dadurch gekennzeichnet, dass** zwischen Feder (30, 46) und Wegmesseinrichtung (38, 52) ein mechanischer Übertrager vorgesehen ist, der mechanisch den Messweg vergrößert.

2. Prozessventil nach Anspruch 1 **dadurch gekennzeichnet, dass** der mechanische Übertrager als Hebel (36, 50) ausgebildet ist.

3. Prozessventil nach einem der vorangehenden Ansprüche, **dadurch gekennzeichnet, dass** die Kraftmesseinrichtung (20) zwischen zwei Teilen der Ventilstange (16), zwischen Ventilstange (16) und Drosselkörper (12) oder zwischen Antriebseinheit (18) und Ventilstange (12) liegt

4. Prozessventil nach einem der vorangehenden Ansprüche, **dadurch gekennzeichnet, dass** die Wegmesseinrichtung einen AMR-Sensor (38) umfasst.

5. Prozessventil nach einem der vorangehenden Ansprüche, **dadurch gekennzeichnet, dass** die Feder als Tellerfeder (30) ausgebildet ist.

6. Prozessventil nach einem der vorangehenden Ansprüche, **dadurch gekennzeichnet, dass** die Feder als ein mit Ausnehmungen versehener Körper (46) ausgebildet ist, der insbesondere S-förmig ist.

7. Prozessventil nach Anspruch 6, **dadurch gekennzeichnet, dass** ein mechanischer Wegübertrager (50) zwischen ein dem äußeren und dem mittleren Steg des Körpers (46) derart verspannt ist, dass bei einer Stauchung oder Dehnung der S-Form der Wegübertrager (50) entsprechend der Veränderung ausgelenkt wird.

## Claims

1. A process valve (10) comprising a valve seat (14), a flow restrictor (12), a valve rod (16) and a drive unit (18) acting on said valve rod (16), with a force measuring device (20, 44) being provided between said drive unit (18) and said flow restrictor (12), which force measuring device (24, 49) includes a spring (30, 46) and comprises displacement measuring means (38, 42, 50, 52), which displacement measuring means (38, 42, 50, 52) can be used to measure a position change of a point of measurement relative to a reference point and to determine the force involved based on the displacement of the spring (30, 46) caused by the force acting on it, **characterized in that** a mechanical transformer is provided between said spring (30, 46) and said displacement measuring means (38, 52) in order to amplify the displacement mechanically.

2. The process valve as claimed in claim 1 **characterized in that** said mechanical transformer is designed as a lever (36, 50).

3. The process valve as claimed in one of the preceding claims **characterized in that** the force measuring device (20) is positioned between two parts of said valve rod (16), between said valve rod (16) and said flow restrictor (12), or between said drive unit (18) and said valve rod (12).

4. The process valve as claimed in one of the preceding claims **characterized in that** said displacement measuring means comprises an AMR sensor (38).

5. The process valve as claimed in one of the preceding claims **characterized in that** said spring is designed as a disk spring (30).

6. The process valve as claimed in one of the preceding claims **characterized in that** said spring is designed as a body (46), in particular an S-shaped body, which is provided with recesses.

7. The process valve as claimed in claim 6 **characterized in that** a mechanical displacement transformer (50) is braced between an outer web and the central web of said body (46) in such a manner that any compression or extension of said S-shaped body will cause said displacement transformer (50) to be deflected according to such a change.

## Revendications

1. Soupape de processus (10) comprenant un siège de soupape (14), un corps d'étrangleur (12), une tige de soupape (16) et une unité d'actionnement (18) agissant sur celle-ci, un capteur de force (20, 44) étant positionné entre l'unité d'actionnement (18) et le corps d'étrangleur (12), **caractérisée en ce que** le capteur de force présente un ressort (30, 46) et que le capteur de force (29, 44) dispose d'un capteur de distance (38, 42, 50, 52), le capteur de distance (38, 42, 50, 52) permettant de mesurer le changement de position d'un point de mesure par rapport à un point de référence, et que la force agissante peut être mesurée sur la longueur sur laquelle se modifie le ressort sous la force exercée, un transmetteur mécanique positionné entre le ressort (30, 46) et le capteur de distance (38, 52) permettant de mesurer de façon mécanique la course de mesure.

2. Soupape de processus selon la revendication 1, **caractérisée en ce que** le transmetteur mécanique est formé comme un levier (36, 50).

3. Soupape de processus selon l'une des revendications précédentes, **caractérisée en ce que** le capteur de force (20) est situé entre des parties de la tige de soupape (16), entre la tige de soupape (16) et le corps d'étrangleur (12) ou entre l'unité d'actionnement (18) et la tige de soupape (12).

4. Soupape de processus selon l'une des revendications précédentes, **caractérisée en ce que** le capteur de distance comprend un capteur AMR (38).

5. Soupape de processus selon l'une des revendications précédentes, **caractérisée en ce que** le ressort est formé comme une rondelle-ressort (30).

6. Soupape de processus selon l'une des revendications précédentes, **caractérisée en ce que** le ressort est formé comme un corps pourvu d'une exclusion et prenant notamment la forme d'un S.

7. Soupape de processus selon la revendication 6, **caractérisée en ce qu'**un transmetteur de distance mécanique (50) est tendu entre l'arête externe et l'arête centrale du corps (46) de façon, lors d'une compression ou d'un allongement, à écarter la forme en S du transmetteur de course (50) conformément à la modification.
